# FASCICULE DE BREVET EUROPEEN

(11) **EP 0 803 394 B1**
(45) Date de publication et mention de la délivrance du brevet: **10.05.2000**
(21) Numéro de dépôt: 97400893.0
(22) Date de dépôt: 21.04.1997
(51) Int. Cl.: B60K 15/077

(54) **Dispositif de puisage de carburant à réserve dite positive et véhicule automobile équipé de ce dispositif**
Kraftstoff-Zufuhrvorrichtung in einem Stautopf und mit dieser Vorrichtung ausgestattetes Kraftfahrzeug
Fuel feed arrangement in an anti-surge vessel and motor vehicle equipped with this arrangement

(30) Priorité: 22.04.1996 FR 9605030
(43) Date de publication de la demande: 29.10.1997
(73) Titulaire: AUTOMOBILES PEUGEOT, 75116 Paris (FR); AUTOMOBILES CITROEN, 92200 Neuilly-sur-Seine (FR)
(72) Inventeur: Del Rio, Luis, 92130 Issy les Moulineaux (FR)
(74) Mandataire: Thinat, Michel

(56) Documents cités:
- EP-A- 0 086 425
- DE-A- 4 413 846
- DE-B- 2 602 234

## Description

La présente invention concerne un dispositif de puisage de carburant à réserve dite positive, notamment pour l'alimentation des moteurs diesels ou essence de véhicule automobile.

Il est connu que dans les dispositifs de puisage de carburant, il peut se produire une pénurie de carburant lorsque le réservoir est presque vide et que le carburant est maintenu éloigné de la canalisation d'aspiration vers le moteur du fait par exemple que le véhicule est dans une pente ou qu'il reste incliné de manière prolongée dans un tournant.

Pour limiter cet inconvénient, on a déjà proposé des dispositifs de pompage de carburant dans lesquels une réserve de carburant dite positive est logée dans le réservoir pour fournir du carburant au moteur même lorsque le réservoir est presque vide.

Une telle réserve positive connue est fixée sur le fond du réservoir par l'intermédiaire de pieds qui font saillie du fond de la réserve et comporte une ouverture à travers son fond pour l'admission du carburant dans la réserve, laquelle ouverture est obturée par un clapet anti-retour flottant situé directement sous le fond de la réserve.

Ainsi, lors du roulage du véhicule, le clapet flottant se soulève sous l'action dynamique des vagues de carburant qui se forment dans le réservoir et se ferme juste après, de sorte que le niveau de carburant dans la réserve est toujours plus haut que celui dans le réservoir.

Toutefois, les dispositifs de puisage à réserve positive existants ne permettent pas de puiser au maximum la quantité de carburant restante dans le réservoir quelque soit la position statique du véhicule, par exemple en dévers ou en pente, ou sa position dynamique, de sorte que la quantité de carburant admise dans la réserve peut devenir insuffisante en regard de la consommation du moteur et le dispositif de puisage se dénoyer entraînant des irrégularités de fonctionnement du moteur, voire sa panne.

La présente invention a donc pour but d'éliminer les inconvénients précités et de proposer un dispositif de puisage de carburant à réserve positive permettant de puiser au maximum la quantité de carburant restante dans le réservoir, quelque soit son inclinaison, et d'éviter tout dénoyage de la réserve positive.

A cet effet, la présente invention a pour objet un dispositif de puisage de carburant, comportant une réserve de carburant dite positive à l'intérieur d'un réservoir, ladite réserve étant maintenue sur le fond du réservoir et comportant à sa base une ouverture communiquant avec le réservoir pour l'admission du carburant dans la réserve, ladite ouverture étant obturée par un clapet anti-retour, caractérisé en ce que le fond de la réserve est plaqué contre le fond du réservoir, l'ouverture précitée traverse la paroi latérale de la réserve et débouche directement au niveau du fond du réservoir et le clapet précité est incliné par rapport au fond du réservoir.

L'agencement particulier décrit ci-dessus permet aux petites vagues d'atteindre plus facilement l'ouverture de la réserve car l'ouverture débouche directement au niveau du fond du réservoir et de soulever avec une moindre pression le clapet pour pénétrer dans la réserve en raison de l'inclinaison du clapet.

Avantageusement, le clapet fait un angle d'environ 45° par rapport au fond du réservoir, cette inclinaison définissant le meilleur compromis masse/étanchéité/facilité d'ouverture du clapet.

Selon une autre caractéristique de l'invention, la partie supérieure du clapet est fixée de manière articulée sur la face interne de la paroi latérale de la réserve.

Dans un mode de réalisation préféré de l'invention, la réserve positive comprend au moins une cloison interne en forme générale de C en coupe transversale. Dans le cas où la réserve ne comporte qu'une seule cloison, celle-ci s'ouvre du côté opposé au clapet.

La présence de cette cloison en C crée un labyrinthe à l'intérieur de la réserve apte à piéger le carburant au centre de celle-ci pour assurer qu'un volume de carburant suffisant reste au centre de la réserve et puisse donc être puisé quelque soit l'inclinaison du véhicule, sans risque de dénoyage de la réserve, notamment au cas où le clapet fuit ou se ferme mal.

On peut prévoir que la réserve comprenne deux cloisons en C emboîtées l'une dans l'autre et éventuellement concentriques.

Selon encore une autre caractéristique, les ouvertures respectives des deux cloisons en C sont sensiblement opposées et alignées avec le clapet.

Selon une autre caractéristique de l'invention, la canalisation de rejet du carburant en retour du moteur débouche dans la réserve entre sa paroi externe et la cloison interne la plus proche.

Selon une autre caractéristique de l'invention la hauteur de chaque cloison interne est inférieure à celle de la paroi externe de la réserve et l'ouverture de chaque cloison en C s'évase vers le haut, pour agir comme bec verseur et éviter tout bouillonnement dans la réserve.

De préférence, le clapet est orienté dans la direction longitudinale du réservoir.

L'invention vise également un véhicule automobile équipé du dispositif de puisage précité pour alimenter en carburant son moteur, essence ou diesel.

L'invention sera mieux comprise, et d'autres buts, caractéristiques, détails et avantages et celle-ci apparaîtront plus clairement au cours de la description explicative qui va suivre de plusieurs modes de réalisation particuliers actuellement préférés de l'invention donnés uniquement à titre illustratif et non limitatif, en référence aux dessins schématiques annexés, dans lesquels.

La figure 1 est une vue en coupe axiale d'un mode de réalisation du dispositif de l'invention.

La figure 2 est une vue schématique représentant le dispositif de la figure 1 en dévers.

La figure 3 est une vue de dessus de la réserve selon un autre mode de réalisation du dispositif de l'invention.

La figure 4 est une vue en coupe axiale de la figure 3, suivant la ligne IV-IV.

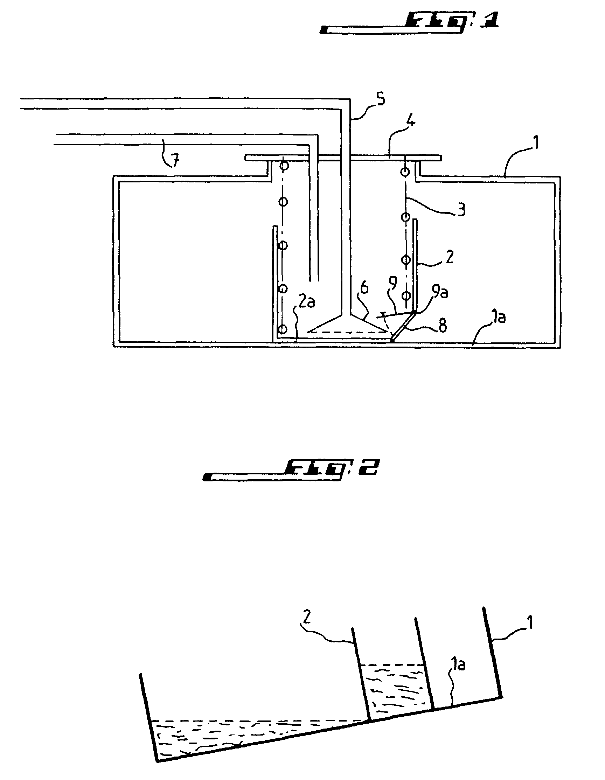

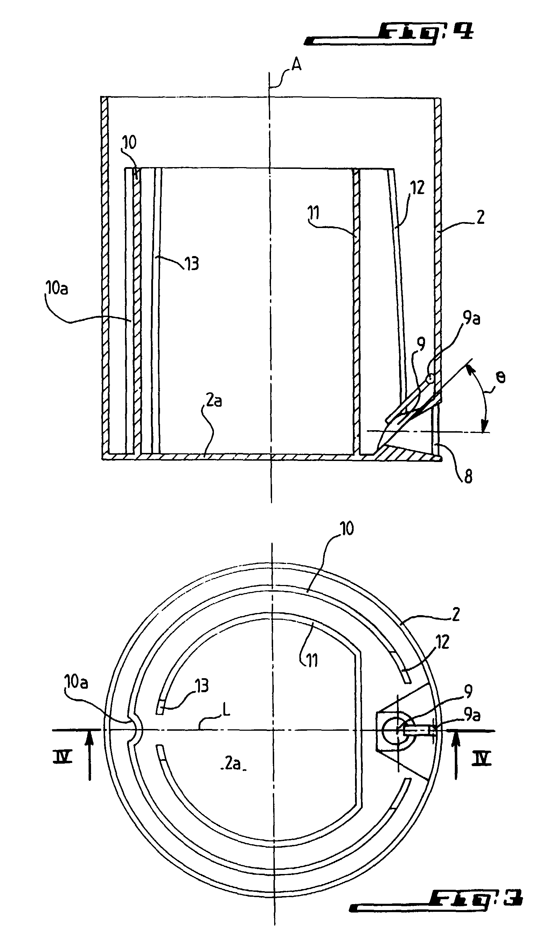

Suivant l'exemple de réalisation représenté sur les figures 1 et 2, le dispositif de l'invention comprend un réservoir 1 dans lequel est logée une réserve positive 2 en forme de récipient cylindrique ouvert vers le haut, le fond 2a de cette dernière étant plaqué contre le fond la du réservoir 1 par un moyen élastique de compression tel qu'un ressort 3 qui prend appui à une extrémité sur le fond 2a de la réserve 2 et s'étend axialement à l'intérieur de celle-ci jusqu'à son siège qui est formé par une plaque supérieure 4 qui vient fermer de manière étanche la partie supérieure du réservoir.

Une canalisation 5 de puisage du carburant vers un moteur par exemple, traverse la plaque 4 pour s'étendre axialement à l'intérieur de la réserve 2 et se prolonge par une crépine de puisage 6 qui se situe à proximité du fond 2a de la réserve.

Une autre canalisation 7 de rejet du carburant en retour du moteur traverse également la plaque 4 et débouche à l'intérieur de la réserve 2, parallèlement à la canalisation de puisage 5.

La réserve 2 comporte à la base de sa paroi externe une ouverture latérale 8 qui est obturée de manière étanche par un clapet anti-retour 9 qui est fixé de manière articulée à sa partie supérieure 9a sur la paroi interne de la réserve 2.

L'ouverture 8 fait directement communiquer le fond la du réservoir avec le fond 2a de la réserve, alors que dans l'art antérieur, le fond de la réserve est espacé d'une certaine hauteur du fond du réservoir, pour loger le clapet flottant.

Etant donné que le clapet 9 n'autorise l'admission du carburant que dans un seul sens, c'est-à-dire du réservoir 1 vers la réserve 2, le niveau de carburant dans cette dernière est toujours plus haut que celui dans le réservoir 1, comme illustré sur la figure 2.

On va maintenant décrire en référence aux figures 3 et 4, un deuxième mode de réalisation de l'invention dans lequel la réserve 2 comporte deux cloisons internes 10, 11.

Les cloisons 10 et 11 sont coaxiales à l'axe A de la réserve 2 et présentent une forme générale en C en coupe transversale (voir figure 3).

La cloison 10 la plus proche de la paroi externe de la réserve 2 s'ouvre sur le clapet 9 et présente à son extrémité opposée un logement vertical bombé vers l'intérieur 10a pour recevoir la canalisation de rejet 7 qui débouche dans la réserve 2 entre la paroi externe précitée et la cloison la plus proche 10.

La cloison la plus centrale 11 s'ouvre sur ledit logement bombé 10a, c'est-à-dire à l'opposé de l'ouverture 12 de la cloison 10 précitée.

On remarque sur les figures 3 et 4 que les ouvertures 12 et 13 des cloisons 10 et 11 sont alignées avec le clapet 9.

Toutefois, on pourrait prévoir que les ouvertures précitées soient décalées de cette ligne commune L d'au plus 45° par rapport au centre de la réserve.

Le clapet 9 est orienté de préférence dans la direction longitudinale du réservoir, c'est-à-dire en général dans la direction transversale du véhicule, car les vagues les plus grandes se forment sur la partie la plus longue du réservoir.

On voit sur la figure 4 que les ouvertures respectives 12 et 13 des cloisons 10 et 11 s'évasent vers le haut, pour servir de bec verseur et éviter tout bouillonnement de carburant dans la réserve.

On voit plus clairement sur la figure 4 que le clapet 9 forme un angle θ sensiblement égal à 45° par rapport au fond de la réserve, c'est-à-dire au fond du réservoir.

Cette inclinaison permet d'avoir un clapet suffisamment léger pour s'ouvrir sous l'effet des vagues et suffisamment lourd pour assurer une étanchéité de la réserve dans toutes les positions du véhicule.

Bien entendu, on pourrait sans sortir du cadre de l'invention prévoir plusieurs ouvertures 8 avec leur clapet associé 9 ainsi qu'une ou plusieurs cloisons internes formant un labyrinthe pour piéger le carburant au centre de la réserve.

Bien que l'invention ait été décrite en liaison avec des modes de réalisation particuliers, il est bien évident qu'elle n'y ait nullement limitée et qu'elle comprend tous les équivalents techniques des moyens décrits ainsi que leurs combinaisons si celles-ci entrent dans le cadre des revendications qui suivent.

## Revendications

1. Dispositif de puisage de carburant, comportant une réserve de carburant dite positive (2) à l'intérieur d'un réservoir (1), ladite réserve étant maintenue sur le fond (1a) du réservoir et comportant à sa base une ouverture (8) communiquant avec le réservoir pour l'admission du carburant dans la réserve, ladite ouverture étant obturée par un clapet anti-retour (9), caractérisé en ce que le fond (2a) de la réserve (2) est plaqué contre le fond (1a) du réservoir (1), l'ouverture précitée (8) traverse la paroi latérale de la réserve (2) et débouche directement au niveau du fond (1a) du réservoir (1), et le clapet précité (9), en position fermée, fait un angle (θ) d'environ 45° par rapport au fond du réservoir.

2. Dispositif selon la revendication 1, caractérisé en ce que le clapet (9) fait, en position ouverte, un angle (θ) d'environ 0° par rapport au fond (1a) du réservoir (1).

3. Dispositif selon la revendication 1 ou 2, caractérisé en ce que la partie supérieure (9a) du clapet (9) est fixée de manière articulée sur la face interne de la paroi latérale de la réserve (2).

4. Dispositif selon la revendication 1, caractérisé en ce que la réserve positive (2) comprend au moins une cloison interne (10, 11) en forme générale de C en coupe transversale.

5. Dispositif selon la revendication 4, caractérisé en ce que la réserve (2) comprend deux cloisons internes (10, 11) emboîtées l'une dans l'autre et concentriques.

6. Dispositif selon la revendication 4, caractérisé en ce que la réserve (2) comprend une seule cloison interne (11) qui s'ouvre du côté opposé au clapet (9).

7. Dispositif selon la revendication 5, caractérisé en ce que les ouvertures respectives (12, 13) des deux cloisons internes (10, 11) sont sensiblement opposées et alignées avec le clapet (9).

8. Dispositif selon l'une des revendications 4 à 7, caractérisé en ce que la canalisation de retour du carburant (7) débouche dans la réserve (2) entre sa paroi externe et la cloison interne (10) la plus proche.

9. Dispositif selon l'une des revendications 4 à 8, caractérisé en ce que la hauteur de chaque cloison interne (10, 11) est inférieure à celle de la paroi externe de la réserve (2) et l'ouverture (12, 13) de chaque cloison interne s'évase vers le haut pour agir comme bec verseur.

10. Dispositif selon l'une des revendications précédentes, caractérisé en ce que le clapet (9) est orienté dans la direction longitudinale du réservoir (1).

11. Véhicule automobile équipé du dispositif de puisage selon l'une des revendications précédentes, pour alimenter en carburant son moteur.

## Patentansprüche

1. Kraftstoff-Zufuhrvorrichtung, umfassend einen Stautopf (2) im Inneren des Tanks (1), wobei besagter Stautopf am Boden (1a) des Tanks gehalten wird und an seiner Basis eine Öffnung (8) umfaßt, die mit dem Tank zum Einlaß des Kraftstoffs in den Stautopf zusammenwirkt, wobei besagte Öffnung durch ein Rückschlagventil (9) verschlossen wird, dadurch gekennzeichnet, daß der Boden (2a) des Stautopfes (2) gegen den Boden (1a) des Tanks (1) plattiert ist, die besagte Öffnung (8) die Seitenwand des Stautopfes (2) durchquert und direkt auf der Höhe des Bodens (1a) des Tanks (1) einmündet, und das besagte Rückschlagventil (9) in geschlossener Position einen Winkel (0) von ungefähr 45° im Verhältnis zum Boden des Tanks bildet.

2. Vorrichtung gemäß Anspruch 1, dadurch gekennzeichnet, daß das Rückschlagventil (9) in geöffneter Position einen Winkel (0) von ungefähr 0° im Verhältnis zum Boden (1a) des Tanks (1) bildet.

3. Vorrichtung gemäß Anspruch 1 oder 2, dadurch gekennzeichnet, daß der obere Teil (9a) des Rückschlagventils (9) artikuliert auf der Innenseite der Seitenwand des Stautopfes (2) befestigt ist.

4. Vorrichtung gemäß Anspruch 1, dadurch gekennzeichnet, daß der Stautopf (2) wenigstens eine eine im Querschnitt allgemeine C-Form aufweisende innere Trennwand (10, 11) umfaßt.

5. Vorrichtung gemäß Anspruch 4, dadurch gekennzeichnet, daß der Stautopf (2) zwei konzentrische und ineinandergefügte innere Trennwände (10, 11) umfaßt.

6. Vorrichtung gemäß Anspruch 4, dadurch gekennzeichnet, daß der Stautopf (2) eine einzige innere Trennwand (11) umfaßt, die auf der dem Rückschlagventil (9) gegenüberliegenden Seite geöffnet wird.

7. Vorrichtung gemäß Anspruch 5, dadurch gekennzeichnet, daß die jeweiligen Öffnungen (12, 13) der zwei inneren Trennwände (10, 11) deutlich dem Rückschlagventil (9) gegenüberliegen und mit ihm in einer Flucht liegen.

8. Vorrichtung gemäß Anspruch 4 bis 7, dadurch gekennzeichnet, daß die Rücklaufkanalisation des Kraftstoffes (7) zwischen der Außenwand des Stautopfes und der am nächsten gelegenen inneren Trennwand (10) in den Stautopf (2) einmündet.

9. Vorrichtung gemäß Anspruch 4 bis 8, dadurch gekennzeichnet, daß die Höhe jeder inneren Trennwand (10, 11) niedriger ist als die der Außenwand des Stautopfes (2) und die Öffnung (12, 13) jeder inneren Trennwand sich nach oben konisch erweitert, um als Ausguß zu wirken.

10. Vorrichtung gemäß einem der vorherigen Ansprüche, dadurch gekennzeichnet, daß das Rückschlagventil (9) in Längsrichtung des Tanks (1) ausgerichtet ist.

11. Mit der Kraftstoff-Zufuhrvorrichtung gemäß einer der vorherigen Ansprüchen zur Versorgung seines Motors mit Kraftstoff ausgestattetes Kraftfahrzeug.

## Claims

1. Fuel feed arrangement, comprising a so called positive fuel reserve (2) within a tank (1), said reserve being maintained on the bottom (1a) of the tank and comprising at its base an aperture (8) that communicates with the tank for supplying fuel in the reserve, said aperture being sealed by a non-return valve (9), characterized in that the bottom (2a) of the reserve (2) is urged on the bottom (1a) of the tank (1), said aperture (8) crosses the lateral wall of the reserve (2) and opens directly at the level of the bottom (1a) of the tank (1), and said valve (9),in a closed position, makes an angle (θ) of about 45° with respect to the bottom of the tank.

2. Device according to claim 1, characterized in that the valve (9) makes, in an opened position, an angle (θ) of about 0° with respect to the bottom (1a) of the tank (1).

3. Device according to claim 1 or 2, characterized in that the upper part (9a) of the valve (9) is articulately fixed on the inner face of the lateral wall of the reserve (2).

4. Device according to claim 1, characterized in that the positive reserve (2) comprises at least one inner partition wall (10, 11) having a generally C shaped cross-section.

5. Device according to claim 4, characterized in that the reserve (2) comprises two inner partition walls (10, 11) encased one in the other and which are concentric.

6. Device according to claim 4, characterized in that the reserve (2) comprises only one inner partition wall (11) which opens on the side that is opposed to the valve (9).

7. Device according to claim 5, characterized in that the respective apertures (12, 13) of the two inner partition walls (10, 11) are substantially opposed and aligned with the valve (9) .

8. Device according to one of claims 4 to 7, characterized in that the fuel return line (7) opens in the reserve (2) between its outer wall and the nearest inner partition wall (10).

9. Device according to one of claims 4 to 8, characterized in that the height of each inner partition wall (10, 11) is smaller than that of the outer wall of the reserve (2) and the aperture (12, 13) of each inner partition wall widens upwardly for acting as pouring nose.

10. Device according to one of the preceding claims, characterized in that the valve (9) is directed in the longitudinal direction of the tank (1).

11. Motor vehicle equiped with the fuel feed arrangement according to one of the preceding claims, for supplying fuel to its motor.
